# EUROPEAN PATENT SPECIFICATION

(11) **EP 1 746 052 B1**
(45) Date of publication and mention of the grant of the patent: **16.04.2008**
(21) Application number: 06013161.2
(22) Date of filing: 26.06.2006
(51) Int. Cl.: B65G 35/06

(54) **Automatic production line for processing and assembling components for industries in general**
Automatische Produktionsanlage zur Verarbeitung und Montage von Komponenten für Industrien im Allgemeinen
Ligne de production automatique pour le traitement et l'assemblage des composants pour les industries en général

(30) Priority: 20.07.2005 IT MI20051393
(43) Date of publication of application: 24.01.2007
(73) Proprietor: Marsilli & Co. S.p.A., 26012 Castelleone CR (IT)
(72) Inventor: Parati, Gian Battista, 26012 Castelleone (Prov. of Cremona) (IT)
(74) Representative: Alagem Modiano, Lara S.

(56) References cited:
- EP-A1- 0 264 532
- DE-A1- 3 206 929

## Description

The present invention relates to an automatic production line for processing and assembling components for industries in general.

As is known, so-called automatic production lines for components in general, referred to herein as "parts" are constituted typically by a conveyance system on which the different operating units intended to perform the required processes on the parts are arranged, such parts being normally provided on trolleys which are made to advance by a conveyance system, which can be of the belt or chain type, until they encounter mechanical stop and indexing devices, which stop the pallets and position them so as to perform the various operations.

Therefore, the pallets are subjected to a movement which is practically unidirectional and which at most allows to not stop at a processing station but does not allow, for example, to modify the order of the processes and much less allows the trolley or pallet to return to a preceding station.

Because of this way of proceeding, if one wishes, for example, to modify the sequence of the operations, it is necessary to re-equip the line completely, since the processing stations necessarily must be in a mutually preset sequence, since the trolley cannot change the order.

This aspect is of course a considerable limitation of traditional lines, which has been overcome with Italian patent 1319074, by the same Applicant, which provided, on the automatic production line, the possibility to have, on each trolley, motor means which allowed the trolley to assume the movement deemed appropriate, so that it could be, under the actuation of an external unit, arranged at the various preselected operating units, regardless of the positioning order of such operating units.

This type of solution, which has proved to be very valid in every respect, has been found to be susceptible of improvements as regards its versatility and the possibility to manage automatically a whole series of processes on the parts, by utilizing the possibility to move the trolleys freely, with the advantage of being able to move said trolleys on different operating lines, so as to be able to also modify the mutual positioning of the trolleys.

Within this aim, an object of the invention is to provide an automatic production line in which it is possible to utilize the autonomous movement of the individual trolleys to perform actuations and operations, consequently simplifying the mechanical structure of the assembly.

Another object of the present invention is to provide an automatic production line which, thanks to its particular constructive characteristics, is capable of giving the greatest assurances of reliability and safety in use and is also competitive from a merely economical standpoint.

Another object of the present invention is to provide an automatic production line which can be obtained easily starting from commonly commercially available elements and materials and is also competitive from a merely economical standpoint.

In accordance with the invention, there is provided an automatic production line for processing and assembling components for industries in general, as defined in the appended claims.

Further characteristics and advantages of the present invention will become better apparent from the description of a preferred but not exclusive embodiment of an automatic production line for processing and assembling components for industry in general, illustrated by way of nonlimiting example in the accompanying drawings, wherein:
Figure 1 is a schematic plan view of an automatic production line with a basic layout;

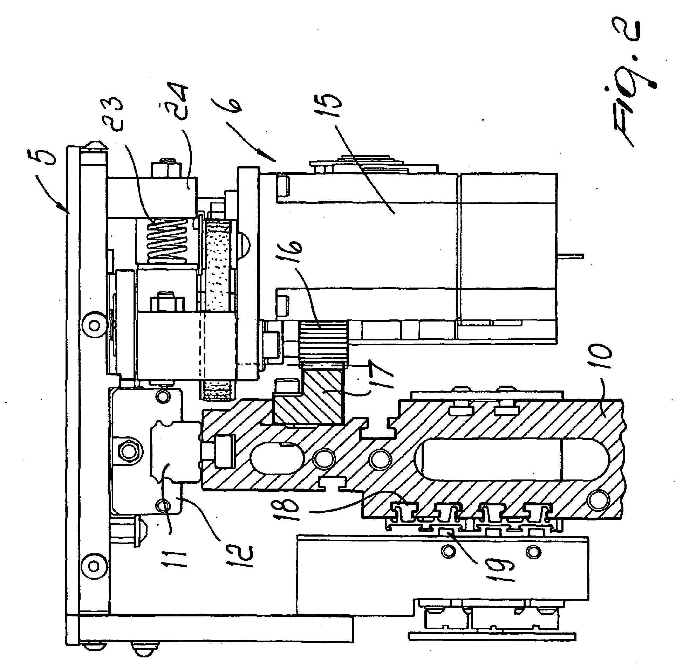

Figure 2 is a sectional view of a runway, showing a trolley;

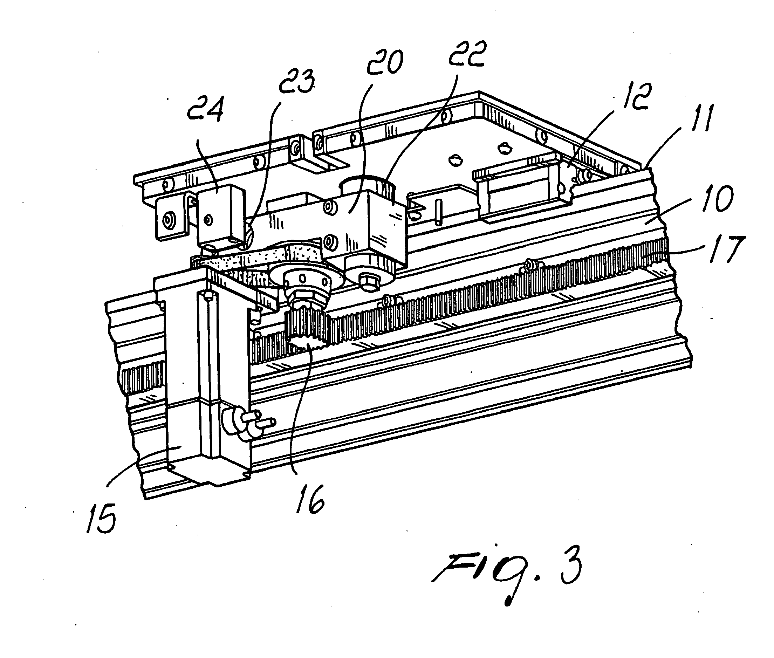

Figure 3 is a bottom perspective view of the trolley, illustrating the motor means;

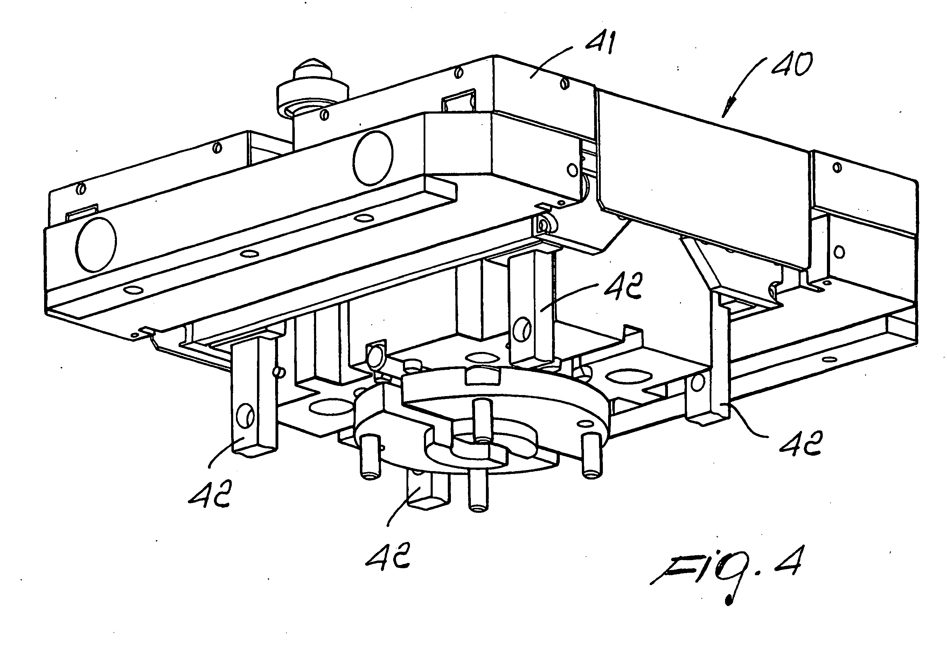

Figure 4 is a bottom view of the worktable arranged on the trolley;
Figure 5 is a schematic view of a trolley which interacts with actuation means during its translational motion on the runway;
Figure 6 is a schematic perspective view of a transfer unit provided with the possibility to produce a translational motion and rotation of a portion of track;
Figures 7, 8, 9 and 10 are schematic views of an automatic production line with runways arranged in pairs which intersect each other, illustrating in different operating positions the transfer unit provided with the possibility to perform rotation and translational motion;
Figure 11 is a schematic plan view of a detail of an automatic line with a transfer unit provided with two portions of mutually parallel tracks;
Figure 12 is a schematic view of a line with two parallel runways and transfer units at the ends, which perform the translational motion of the portion of rail;
Figure 13 is a view of a line with two parallel runways and with transfer units which perform the translational motion and rotation of the portion of rail;
Figure 14 is a view of a production line with a plurality of mutually parallel runways and a transfer unit which performs the paired translational motion of two portions of rail;
Figure 15 is a view of a line with a plurality of mutually parallel runways;
Figure 16 is a schematic view of a line with two runways which form an angle and are parallel to each other.

With reference to the figures, the automatic production line for processing and assembling components for industries in general, according to the invention, comprises a base frame, generally designated by the reference numeral 1, which supports a plurality of processing units, generally designated by the reference numeral 2, which are variously distributed and can be of any type; the operating units are arranged at at least one runway, generally designated by the reference numeral 3, which can have any type of configuration deemed appropriate, as will become better apparent hereinafter.

At least one trolley, generally designated by the reference numeral 5, can move on the runway and is provided with motor means 6, which are controlled by an electronic control unit 7 for the independent and programmable management of the movement of the trolleys.

In greater detail, the frame is provided by means of a series of modular platforms, which are adjacent to each other and determine the final length and shape of the system, which can be provided in any manner according to the contingent requirements.

The runway 3 is obtained by means of a profiled or drawn member 10, which supports, in an upward region, a track 11 with which rollers, generally designated by the reference numeral 12, or other elements which in practice connect the trolley 5, engage slidingly.

The trolley 5 is controlled by the electronic control unit 7, which allows to perform the programmable independent management of the motor means that move the trolleys 5.

The system for communication between the unit 7 and the various trolleys is provided by means of the wireless Ethernet system, which allows to communicate the various data to the individual trolleys.

A supervising personal computer PC is provided which is connected to the line control in order to perform basic programming and any modifications.

In practical execution, movement is provided by way of the motor means 6, which comprise a motor 15, which is supported by each trolley and drives a pinion 16.

The motor-pinion assembly is mounted so that it can oscillate, in order to be able to mesh with the rack 17, which is fixed to the profiled member 10 which in practice forms the runway, thus being able to easily compensate for the inevitable imperfect linearity of the track and of the coupling of various track portions intended to provide the lines, which may be even several meters long.

In order to compensate easily for said errors and reduce drastically the assembly and fine-tuning time, the motor-pinion assembly 15-16 is mounted on a support 20, which oscillates about a vertical pivot 22, which is associated with the trolley and is supported by a pusher spring 23, which acts on the support 20 and abuts against a fixed abutment 24 arranged on the trolley, so as to perform the correct pressure, which always maintains the best precision and maximum correctness in the meshing between the pinion and the rack.

Electrical contacts 18 are also provided on the profiled member 10 that constitutes the runway and are advantageously provided by a bar, against which moving contacts 19 engage, that provide low-voltage sliding contacts which engage the electrified bars, consequently eliminating the cables with the corresponding protections, the moving contacts being duplicated, so as to have no electrical discontinuity at the various joints, such as a possible mechanical/electrical gap.

A very important element of the invention is constituted by the presence of one or more transfer units, generally designated by the reference numeral 30, which are designed to move on a substantially horizontal plane so as to bring the portion of track 31 provided thereby, on which a corresponding trolley 5 can be positioned, in order to modify the runway and in any case allow the various trolleys 5 to provide a path of any complexity.

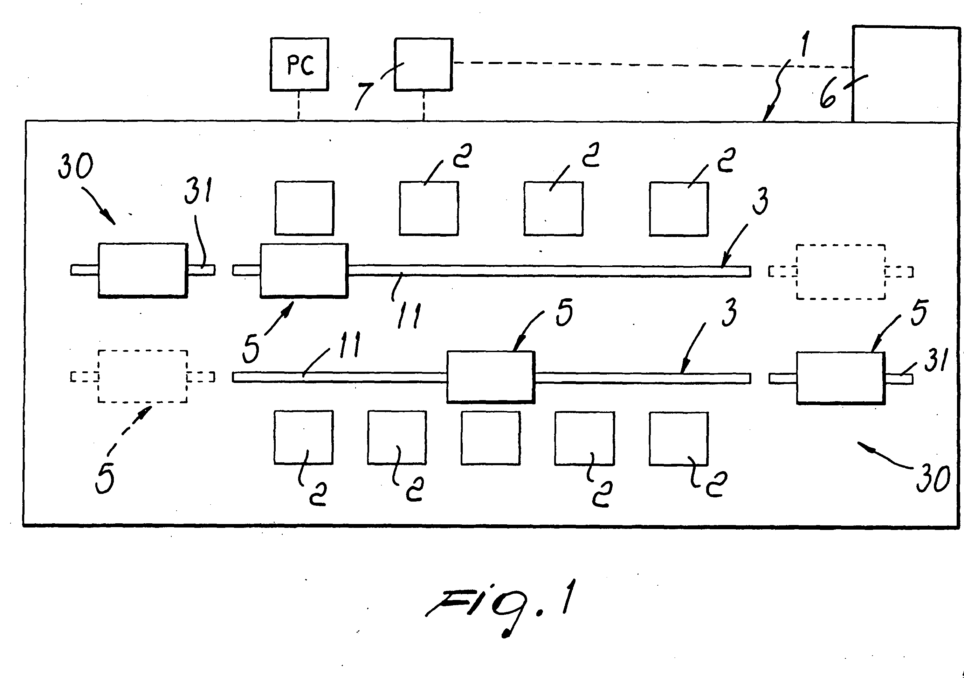

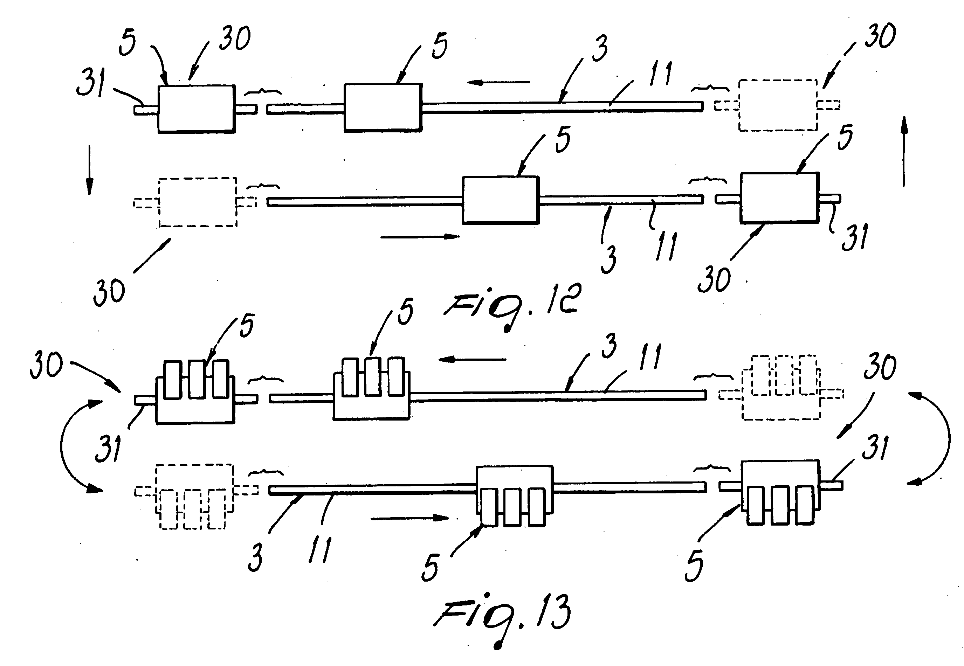

The transfer unit 30, as shown schematically in the figures, can be structured for example so as to perform a simple translational motion in order to form a close path in the case of two runways 3 arranged parallel to each other, as shown schematically in Figures 1 and 12.

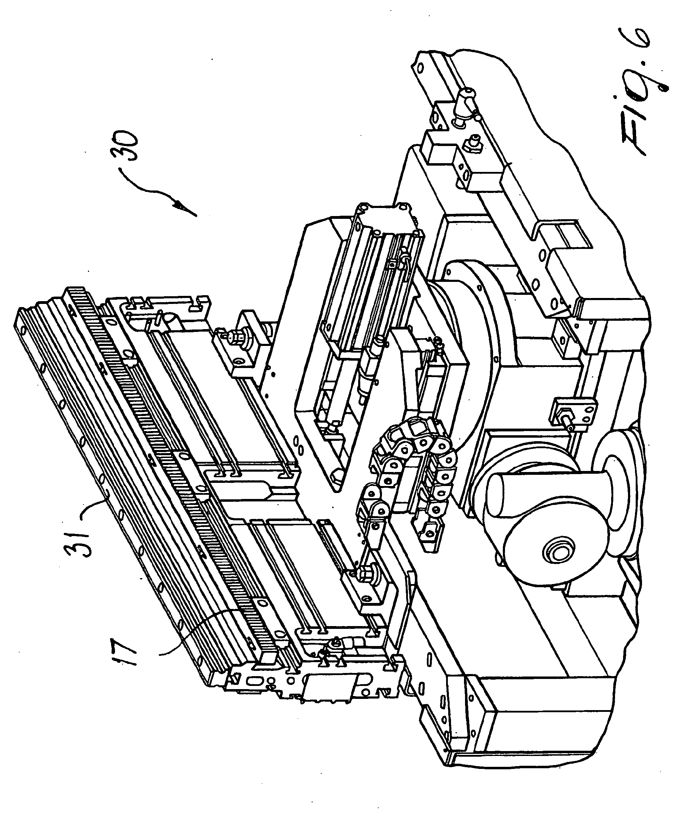

Optionally, as shown in Figures 6 and 13, the transfer unit can also be provided with the possibility to perform a translational motion and rotation about a vertical axis, so that it can provide the 180° rotation of the trolley 5 according to the contingent requirements and the various processes.

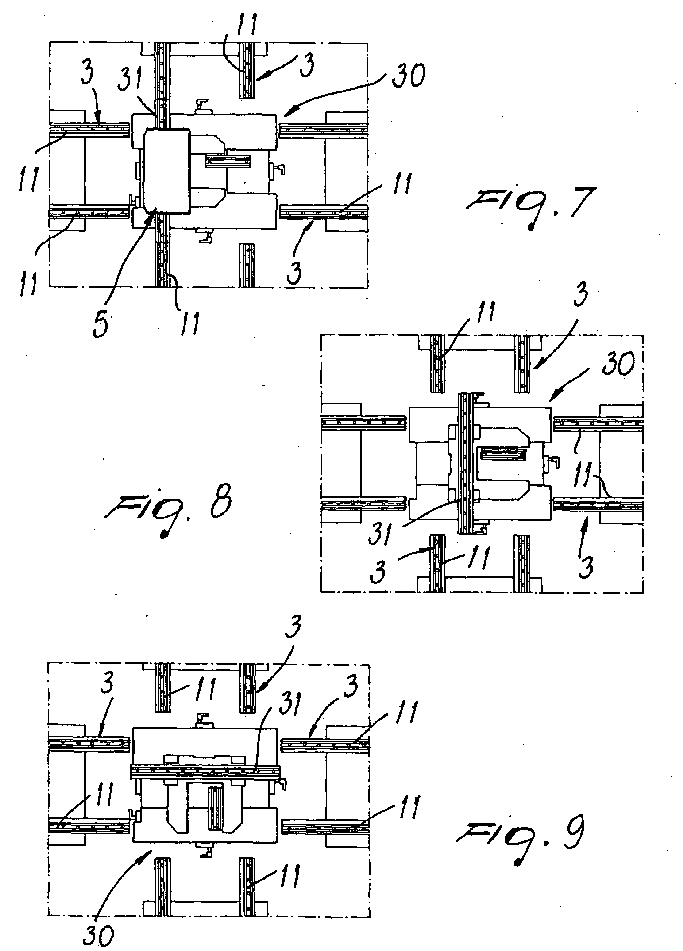

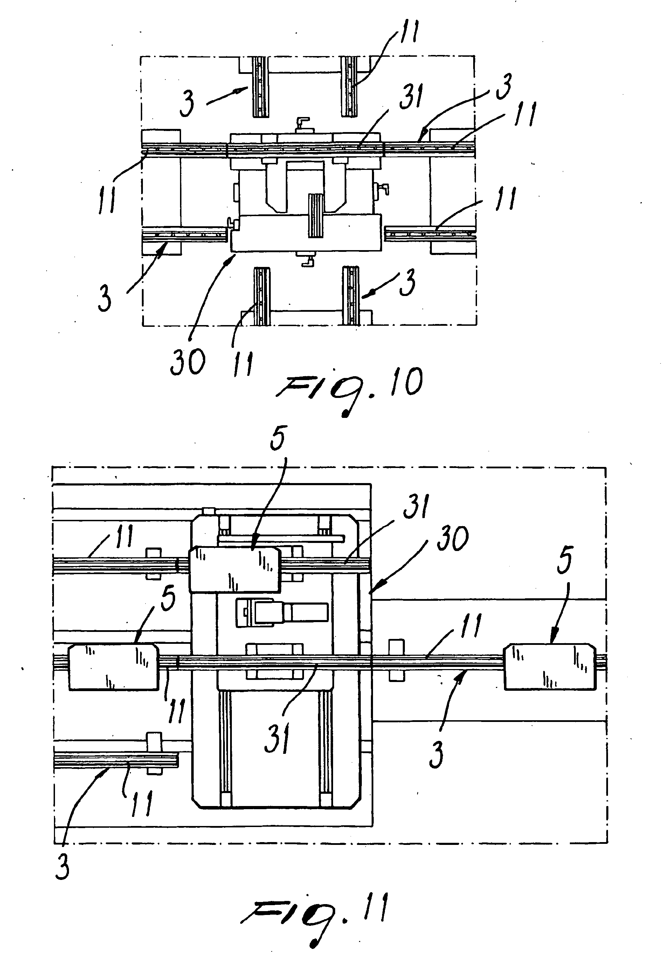

As indicated in Figures 7 to 10, the transfer unit, which can perform translational motion and rotation, allows to manage the movement of the trolley on a plurality of runways which intersect one another, thus allowing the trolley to follow the programmed runways and accordingly to be positioned at the various stations.

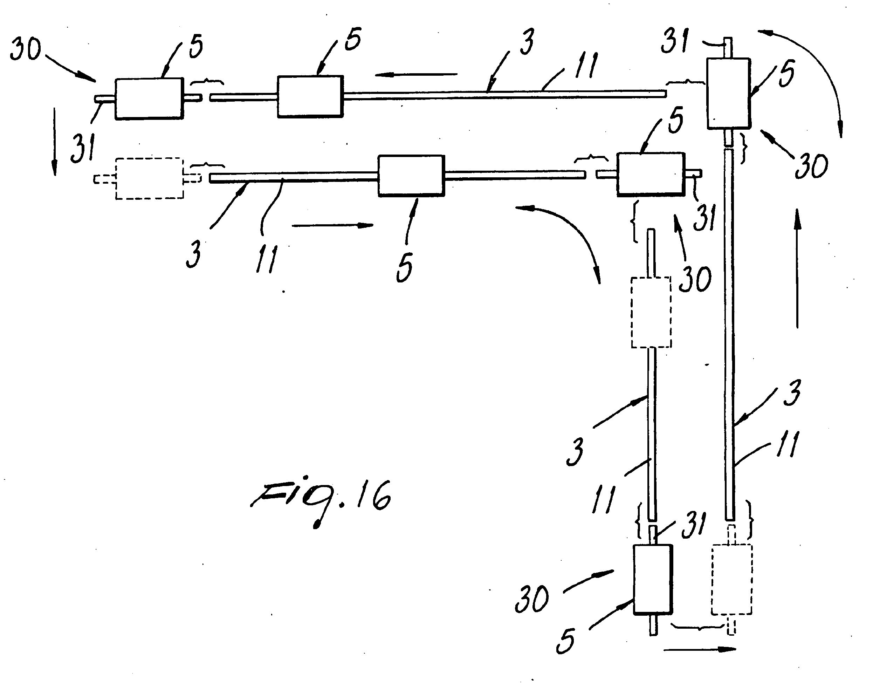

The transfer unit, as shown for example in Figure 16, may also be of the type that allows a simple rotation about a substantially vertical axis; said rotation is through 90° in the specific example, but in practice can span any angle, which can in any case be preset.

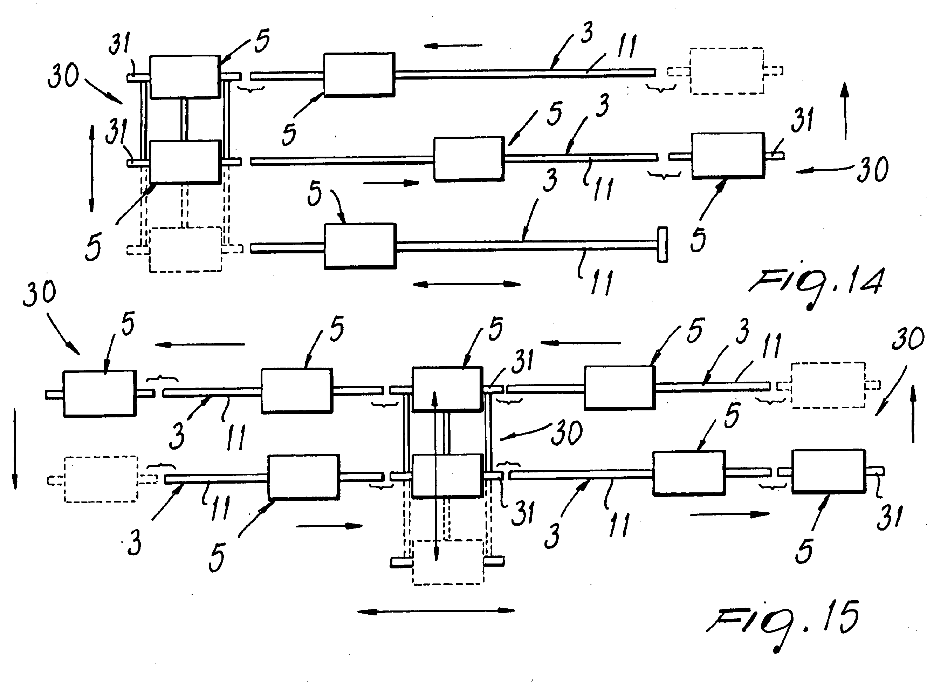

It is also possible to provide transfer units in which two portions of rail, arranged parallel to each other at a preset distance, which corresponds to the distance of two runways, are made to perform a translational motion; this solution, as shown schematically in Figures 14 and 15, allows to manage the movement of the trolleys on a plurality of runways provided in the system.

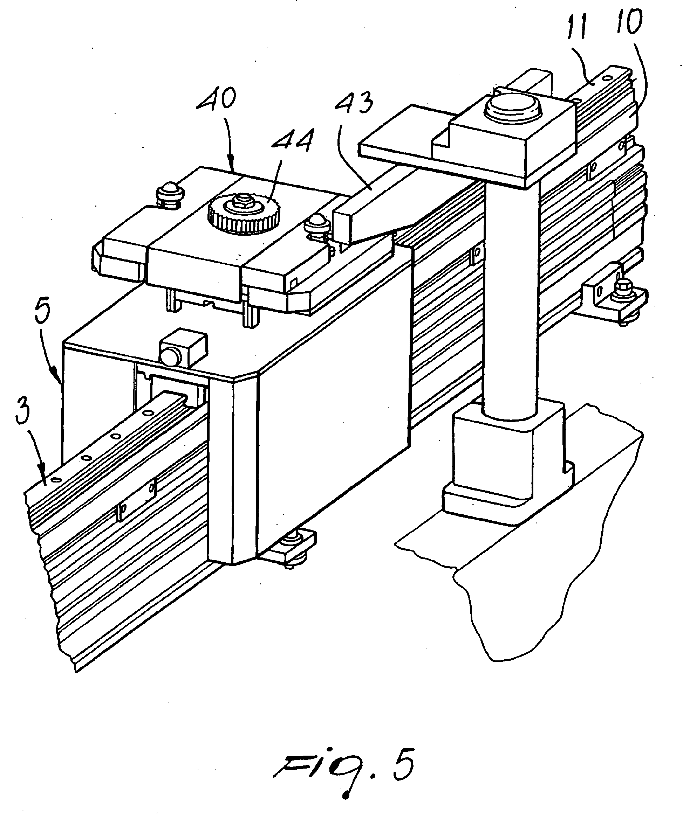

A worktable or other similar element is positioned on the trolley, is generally designated by the reference numeral 40, and is constituted for example by a table 41, which can move on vertical posts 42 and is provided with locking/release and indexing devices, allowing to perform actuations by utilizing the movement of the trolley; as shown in Figure 5, if the table 41 can perform a vertical translational motion on the posts 42 in contrast with, or by virtue of the action of, elastic means, it is in fact possible to provide a fixed cam, designated by the reference numeral 43, which lowers the table and consequently can move an optional gear 44 so that it meshes with fixed racks in order to produce rotations which can be changed in any manner.

The transfer unit has been provided so as to allow simple and automatic alignment with the runway onto which it is meant to feed the trolleys that have been turned or otherwise moved.

For this purpose, fixed mechanical retention elements are provided for each provided stop position, so that at the end of the rotation the translational axis moves in order to be aligned with the runway simply by resting mechanically against the corresponding retention elements, which conveniently have been positioned and calibrated precisely in perfect alignment with the runway.

This solution avoids long and painstaking fine-tuning of the mutual alignment of transfer units and runways and also avoids possible losses of adjustment during the operation of the system.

From what has been described above it is therefore evident that the invention achieves the proposed aim and objects, and in particular the fact is stressed that a solution is provided which allows to provide paths configured in any manner and of any complexity, which allow to preset an entire series of operating units, positioned variously with respect to the base frame, at which the various trolleys with the corresponding worktables can be positioned in relation to the type of process that they must perform, without the need to have a preset fixed path, since the trolleys can move freely over the entire system of the runway.

All the movements are provided due to the fact that transfer units are provided which allow to provide translational motion and rotation and, optionally, combined rotary and translational motion.

It should also be noted that the movement of the various trolleys can be performed as a function of the different types of products to be treated, and therefore it is possible to perform correct speed adjustment.

The possibility to move and rotate the transfer units also allows to center the weight of the trolley and of the parts or pieces in order to avoid other inertias during rotation.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application No. MI2005A001393 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic production line for processing and assembling components for industries in general, comprising a base frame (1) which supports a plurality of operating units (2) for providing the required processes and forms at least one runway (3), which affects said operating units (2) and supports at least one trolley (5) for supporting at least one part to be processed, said supporting trolley (5) being provided with motor means (6) for the movement of said trolley (5), which are controlled by an electronic control unit (7) for their independent and programmable management, **characterized in that** it comprises at least one unit (30) for transferring said at least one movable trolley (5) on a substantially horizontal plane, the production line further comprising a supervising personal computer (PC) which communicates with said electronic control unit (7), said at least one transfer unit (30) comprising at least one portion of track (31) which is adapted to support at least one trolley (5), and said portion of track (31) of said at least one transfer unit (30) being able to perform a translational motion and a rotation about a substantially vertical axis for the connection of mutually parallel runways (3) and/or for the connection of mutually angled runways (3) respectively.

2. The automatic production line according to claim 1, **characterized in that** said control unit (7) is functionally connected to said motor means (6) by way of a wireless Ethernet system.

3. The automatic production line according to one or more of the preceding claims, **characterized in that** said motor means (6) for moving said at least one trolley (5) comprise a motor (15) which acts on a pinion (16) which is mounted so that it can oscillate in order to mesh with a rack (17) which is fixed to a profiled member (10) which forms said runway.

4. The automatic production line according to claim 3, **characterized in that** it comprises a support (20) for said motor (15) and said pinion (16) which oscillates about a vertical pivot (22) which is connected to said trolley (5) and is pushed by a pusher spring (23), which acts against said support (20) and abuts against a fixed abutment (24) associated with said trolley (5).

5. The automatic production line according to one or more of the preceding claims 3-4, **characterized in that** it comprises, on said profiled member (10) which constitutes said runway, electrical contacts (18) with which double sliding contacts (19) engage in order to maintain contact when passing over the mechanical/electrical gap that exists between said runway (3) and said at least one transfer unit (30).

6. The automatic production line according to claim 5, **characterized in that** said electrical contacts (18) are constituted by low-voltage electrified bars.

7. The automatic production line according to one or more of the preceding claims, **characterized in that** it comprises, on said at least one transfer unit (30), two portions of track (31) which are mutually parallel and spaced for the transfer of said at least one trolley on a plurality of runways (3) arranged parallel to each other.

8. The automatic production line according to one or more of the preceding claims, **characterized in that** it comprises, on said at least one trolley (5), at least one worktable (40), which is provided with locking/release and indexing devices for positioning it in a preset position.

9. The automatic production line according to one or more of the preceding claims, **characterized in that** it comprises, on said base frame (1), interaction means which act on said at least one trolley (5) in order to execute commands and actuations by utilizing the movement of said at least one trolley.

## Patentansprüche

1. Eine automatische Fertigungsstraße für die Verarbeitung und den Zusammenbau von Komponenten für Industrien im Allgemeinen, die einen Grundrahmen (1) umfasst, welcher eine Vielzahl von Arbeitseinheiten (2) zur Bereitstellung der benötigten Verfahren trägt und mindestens eine Laufbahn (3) bildet, die die Arbeitseinheiten (2) beeinflusst und mindestens einen Förderwagen (5) zum Tragen mindestens eines zu bearbeitenden Teils trägt, wobei dieser tragende Förderwagen (5) mit Motormitteln (6) zur Bewegung des Förderwagens (5) ausgestattet ist, die für ihre unabhängige und programmierbare Handhabung von einem elektronischen Steuergerät (7) gesteuert werden, **dadurch gekennzeichnet, dass** sie mindestens eine Einheit (30) zur Überführung des mindestens einen beweglichen Förderwagens (5) auf eine im Wesentlichen horizontale Ebene umfasst, wobei die Fertigungsstraße weiter einen Überwachungs-Arbeitsplatzrechner (PC) umfasst, der mit dem elektronischen Steuergerät (7) kommuniziert, wobei die mindestens eine Überführungseinheit (30) mindestens einen Abschnitt einer Bahn (31) umfasst, welche ausgebildet ist, um mindestens einen Förderwagen (5) zu tragen, und wobei der Abschnitt einer Bahn (31) der mindestens einen Überführungseinheit (30) in der Lage ist, eine Translationsbewegung und eine Drehung um eine im Wesentlichen vertikale Achse durchzuführen, und zwar jeweils zur Verbindung von Laufbahnen (3), die zueinander parallel sind, und/oder zur Verbindung von Laufbahnen (3), die in einem Winkel zueinander stehen.

2. Die automatische Fertigungsstraße gemäß Anspruch 1, **dadurch gekennzeichnet, dass** das Steuergerät (7) über ein drahtloses Ethernet-System funktionell mit den Motormitteln (6) verbunden ist.

3. Die automatische Fertigungsstraße gemäß einem oder mehreren der obigen Ansprüche, **dadurch gekennzeichnet, dass** die Motormittel (6) zur Bewegung des mindestens einen Förderwagens (5) einen Motor (15) umfassen, der auf ein Ritzel (16) wirkt, welches so montiert ist, dass es oszillieren kann, um in eine Zahnstange (17) einzugreifen, die an einem profilierten Glied (10) befestigt ist, welches die Laufbahn bildet.

4. Die automatische Fertigungsstraße gemäß Anspruch 3, **dadurch gekennzeichnet, dass** sie eine Halterung (20) für den Motor (15) und das Ritzel (16) umfasst, welche um einen vertikalen Drehpunkt (22) oszilliert, der mit dem Förderwagen (5) verbunden ist und welche von einer Schubfeder (23) geschoben wird, die gegen die Halterung (20) drückt und an ein festes Widerlager (24) anstößt, das mit dem Förderwagen (5) verbunden ist.

5. Die automatische Fertigungsstraße gemäß einem oder mehreren der obigen Ansprüche 3-4, **dadurch gekennzeichnet, dass** sie auf dem profilierten Glied (10), das die Laufbahn bildet, elektrische Kontakte (18) umfasst, in welche doppelte Gleitkontakte (19) eingreifen, um bei der Überbrückung der mechanischen/elektrischen Lücke Kontakt zu halten, die zwischen der Laufbahn (3) und der mindestens einen Überführungseinheit (30) besteht.

6. Die automatische Fertigungsstraße gemäß Anspruch 5, **dadurch gekennzeichnet, dass** die elektrischen Kontakte (18) aus Niederspannungs-elektrisierten Stiften bestehen.

7. Die automatische Fertigungsstraße gemäß einem oder mehreren der obigen Ansprüche, **dadurch gekennzeichnet, dass** sie auf der mindestens einen Überführungseinheit (30) zwei Abschnitte einer Bahn (31) umfasst, die zueinander parallel und beabstandet sind, zur Überführung des mindestens einen Förderwagens auf einer Vielzahl von Laufbahnen (3), die parallel zueinander angeordnet sind.

8. Die automatische Fertigungsstraße gemäß einem oder mehreren der obigen Ansprüche, **dadurch gekennzeichnet, dass** sie auf dem mindestens einen Förderwagen (5) mindestens einen Werktisch (40) umfasst, der zu seiner Positionierung in einer vordefinierten Position mit Verriegelungs-/Entriegelungs- und Indexierungs-Vorrichtungen ausgestattet ist.

9. Die automatische Fertigungsstraße gemäß einem oder mehreren der obigen Ansprüche, **dadurch gekennzeichnet, dass** sie auf dem Grundrahmen (1) Interaktionsmittel umfasst, die auf den mindestens einen Förderwagen (5) einwirken, um durch Ausnutzung der Bewegung des mindestens einen Förderwagens Befehle und Betätigungen auszuführen.

## Revendications

1. Ligne de production automatique pour le traitement et l'assemblage de composants pour les industries en général, comprenant un châssis de base (1) qui supporte une pluralité d'unités d'opération (2) pour la réalisation des traitements requis et forme au moins un chemin de roulement (3) qui affecte lesdites unités d'opération (2) et supporte au moins un chariot (5) pour le support d'au moins une partie à traiter, ledit chariot de support (5) étant muni de moyens moteur (6) pour le déplacement dudit trolley (5), qui sont commandés par une unité de commande électronique (7) pour leur gestion indépendante et programmable, **caractérisée en ce qu'**elle comprend au moins une unité (30) pour le transfert dudit au moins un chariot mobile (5) sur un plan sensiblement horizontal, la ligne de production comprenant en outre un ordinateur de supervision (PC) qui communique avec ladite unité de commande électronique (7), ladite au moins une unité de transfert (30) comprenant au moins une partie de voie (31) qui est adaptée pour supporter au moins un chariot (5), et ladite partie de voie (31) de ladite au moins une unité de transfert (30) étant apte à réaliser un mouvement translationnel et une rotation autour d'un axe sensiblement vertical respectivement pour la connexion de chemins de roulement (3) mutuellement parallèles et/ou pour la connexion de chemins de roulements (3) mutuellement disposés en angle.

2. Ligne de production automatique selon la revendication 1, **caractérisée en ce que** ladite unité de commande (7) est connectée de façon fonctionnelle auxdits moyens moteurs (6) par l'intermédiaire d'un système sans fil Ethernet.

3. Ligne de production automatique selon une ou plusieurs des revendications précédentes, **caractérisés en ce que** lesdits moyens moteur (6) pour le déplacement dudit au moins un chariot (5) comprennent un moteur (15) qui agit sur un pignon (16) qui est monté de sorte à pouvoir osciller afin de s'engréner avec une crémaillère (17) qui est fixée à un membre profilé (10) qui forme ledit chemin de roulement.

4. Ligne de production automatique selon la revendication 3, **caractérisée en ce qu'**elle comprend un support (20) pour ledit moteur (15) et ledit pignon (16) qui oscille autour d'un pivot vertical (22) qui est relié audit chariot (5) et qui est poussé par un ressort de poussée (23) qui agit contre ledit support (20) et qui bute contre une butée fixe (24) associée audit chariot (5).

5. Ligne automatique de production selon une ou plusieurs des revendications 3 à 4 précédentes, **caractérisée en ce qu'**elle comprend, sur ledit membre profilé (10) qui constitue ledit chemin de roulement, des contacts électriques (18) avec lesquels viennent en prise des contacts doubles coulissants (19) afin de maintenir le contact au passage de l'intervalle mécanique/électrique qui existe entre ledit chemin de roulement (3) et ladite au moins une unité de transfert (30).

6. Ligne de production automatique selon la revendication 5, **caractérisée en ce que** lesdits contacts électriques (18) sont constitués par des barres électrifiées à basse tension.

7. Ligne automatique de production selon une ou plusieurs des revendications précédentes, **caractérisés en ce qu'**elle comprend, sur ladite au moins une unité de transfert (30), deux parties de voies (31) qui sont mutuellement parallèles et espacées pour le transfert dudit au moins un chariot sur une pluralité de chemins de roulement (3) disposés parallèles entre eux.

8. Ligne automatique de production selon une ou plusieurs des revendications précédentes, **caractérisée en ce qu'**elle comprend, sur ledit au moins un chariot (5), au moins une table de travail (40) qui est munie de dispositifs de verrouillage/déverrouillage et d'indexage pour le positionner dans une position prédéfinie.

9. Ligne automatique de production selon une ou plusieurs des revendications précédentes, **caractérisée en ce qu'**elle comprend, sur ledit châssis de base (1), des moyens d'interaction qui agissent sur ledit au moins un chariot (5) afin d'exécuter des commandes et des actionnements en utilisant le déplacement dudit au moins un chariot.
